## Europäisches Patentamt
## European Patent Office
## Office européen des brevets

(19)

(11) Publication number: **0 087 168**
**A2**

# (12) EUROPEAN PATENT APPLICATION

(21) Application number: **83101779.3**

(22) Date of filing: **23.02.83**

(51) Int. Cl.³: **G 01 V 3/08**
**A 63 B 29/02**

(30) Priority: 24.02.82 PL 235204
24.02.82 PL 235205
22.04.82 PL 236085

(43) Date of publication of application:
31.08.83 Bulletin 83/35

(84) Designated Contracting States:
AT BE CH DE FR GB IT LI LU

(71) Applicant: **Wojskowa Akademia Techniczna im. Jaroslawa Dabrowskiego**

01-489 Warszawa-49(PL)

(71) Applicant: **Zaklady Radiowe im. Marcina Kasprzaka**
ul. M. Kasprzaka 18/20
01-211 Warszawa(PL)

(72) Inventor: **Lozak, Jan**
ul. Piekna 7/9 m. 78
Warszawa(PL)

(72) Inventor: **Dzieciolowski, Kazimierz**
ul. Mendelejewa 10
Warszawa(PL)

(74) Representative: **Ebbinghaus, Dieter et al,**
v. FÜNER, EBBINGHAUS, FINCK Patentanwälte
European Patent Attorneys Mariahilfplatz 2 & 3
D-8000 München 90(DE)

(54) **A method and a set of devices for remote location of buried persons.**

(57) The subject of the invention is a method and a set of devices for remote location of buried persons, consisting of a transmitter being a sourca of a field and a location device.

The method according to the invention consists in determining in a near-by zone an approximate distance of a transmitter with a magnetic antenna of arbitrary and unknown orientation by a measurement of an amplitude of a field from at least two measuring points and then determining from the dependence of the mean value of an actual amplitude of a resultant vector of a magnetic component of a field induced by an elementary dipole in a form of a magnetic antenna on the distance of the said dipole, increase by 2 dB or decreased by 2 dB, depending on that if the receiving antenna is directed approximately compatibly with the direction of the source of the field or perpendicularly.

A transmitter according to the invention having a transistor generator, a magnetic antenna, a secondery battery, is characterized by that between the supply-and the stationary contacts of a jack - switch an in-series circuit of a rectifying diode, a charging-current limiting resistor, a secondary battery and a sparking-protection resistor is connected. Parallely to the secondary battery and the protection resistor an in-series circuit of a Zener diode and a light-emitting diode signalling the state of charging the secondary battery is connected. The moving contact of the jack - switch is connected with the generator through a supply voltage regulator.

The location device according to the invention is characterized by that it has in the signal channel a connected in-series periodic magnetic antenna distance-connected by a multicore cable through an induction coil with an input resonant circuit at the input of a mixer which is connected with output signalling-indicating circuits, through two low frequency amplifiers, the first amplifier and the mixer being provided with circuits of voltage regulation of the gain, which are connected parallely with the supply voltage regulator through a precision potentiometer coupled with the distance scale and a scaling voltage regulator.

./...

Fig. 4

A method and a set of devices for remote location
of buried persons


The subject of the present invention is a method
and a set of devices for remote location of buried  persons equipped with location transmitters
having a magnetic antenna of arbitrary and unknown orientation, especially persons buried in
mining breaking-downs.


Known and hitherto applied methods of remote location of persons buried by the breaking-down in
mines, equipped with sources of an electromagnetic filed, consist in finding the direction of
the source of the electromagnetic field from at
least two measuring points by means of a directional receiving antenna by the method generally applied in radio navigation. Direction-findings
of the source of the field are performed in a remote zone, i.e. in such a zone in which there is
no field component directed along the radius. The
minimum of the signal determines the directional
plane of the source of the field, generally called in radio navigation the direction.


This method is not very efficacious because the
location transmitter, preferably of low frequency, induces in a rocky medium in the penetrated area
an electromagnetic field mainly having the structure of an induction field, the field component
along the direction of reception being in general negligibly small. Therefore, the determined
direction depends mainly on the direction of the
transmitting antenna. The measuring error of the
direction can reach values of up to $90^{\circ}$.

The next cause of inefficacy of this method is
the appearance, at certain distances from the source of the field in a rocky medium, of the phenomenon of elliptical polarization of the received
signal, sometimes similar to circular. Then, the
direction-finding is not possible.

If in order to decrease the near-by zone, i.e. the
zone of the induction field, the frequency of the
emitted field is correspondingly increased, in
the penetrated rocky area zones of a dead field
appear in the direction of the axis of the transmitting antenna.
Besides, on all directions the influence of considerable suppression of the radio wave appears.
In this case an increase of the direction-finding
error appears also caused by reflections of the
radio wave, which are associated with the presence of electrical heterogeneity in the zone of the
breaking-down and errors caused by electrical anisotropy of a rocky medium.

In the U.S.A. two "zero methods" of remote location of cut off miners are applied /Proceedings

of the IEE, vol. 66, No. 1, January 1978/. Similarly as methods described in U.S. patents no.no. 3,906,504; 3,900,878 and 4,163,977, they are based on the assumption that a loop antenna of the location transmitter searched for will be always univocally, usually horizontally arranged.

These methods cannot be applied in the case of buried miners, at an accidental direction of antennas of location transmitters. Even at an assumption that the direction of a loop antenna of a transmitter is known the accuracy of remote location of miners cut off in headings can be sufficient only in shallow mines and only in areas of a non-built-up surface. Even partial overcoming these difficulties is possible only by means of very expensive auxiliary technical solutions.

Those skilled in the art know methods of remote location in a zone close to the source of the electromagnetic field with a small-dimension magnetic antenna of arbitrary and unknown orientation in an electrically heterogenous and anisotropic medium, described in Polish patents no.no. 97708 and 100548, whereof the most similar thematically is defined in patent no. 97708. The method described in patent no. 97708 is based on a measurement of the biggest amplitude of the magnetic component of the field, whereby the distance of the source of this field from the measuring receiver is determined from the dependence of the mean value of the actual amplitude of the resultant vector of the magnetic component of the field induced by an elementary magnetic dipole of arbitrary spatial orientation on the distance of the said dipole to the reception point.

The result obtained by this method in a near-by zone does not depend on electrical characteristics : of the medium, whereas the error in determining the distance depends on the orientation of a transmitting antenna and is within the range of $\pm$ 1 dB. The biggest inaccuracy appears at orienting the axis of a magnetic transmitting antenna along the direction of receipt or perpendicularly thereto.

Known and hitherto applied transmitters in devices for remote location of buried persons by a measurement of the amplitude of the magnetic component of a field in a near-by zone are built in a form of a single-stage transistor-generator supplied from a storage battery of a miner's lamp and provided with a magnetic antenna, in which the base of the said transistor is connected at the same time with two capacitors whereof the first is connected by the second plate directly with the emitter of the said transistor, and the second capacitor is connected from the other side with the emitter of the same transistor but through a coil of a resonant circuit, which is wound on a magnetic core and forms a magnetic antenna of a transmitter. At the same time the operating frequency of such a location transmitter is low enough so that the field in the area of a rocky medium of a radius of up to several dozen metros has the structure of a field of a near-by zone.

An inconvenience of such a system is that the transmitter is supplied from a storage battery of a miner's lamp. Low voltage of the storage battery hinders stabilization of the supply voltage. Voltage of the storage battery decreases during running-down, and thus, the magnetic moment of the transmitter decreases as well. This causes a decreased accuracy of location of buried persons by the measurement of the amplitude of the magnetic component of the field, dependent also on the value of the magnetic moment of the transmitter.

Besides, if the miner cut off or buried by a breaking-down does not switch off his miner's lamp, the storage battery will run down during several hours after the accident and sometimes there can be too little time to manage to oranize a rescue operation and to reach near the person being rescued in order to perform location, especially in the case of far reaching breaking-downs,

The location transmitter in the hitherto existing embodiment cannot be applied as a standard transmitter for scaling a location receiving device.

Known and hitherto applied location receiving devices, especially for determination of the distance of buried persons, being a practical embodiment of the method of determining a distance according to the Polish patent no. 97708 and a method of determining a distance and an approximate direction to a source of an electromagnetic field as in the Polish patent no. 100548, described in the patent no. P-208372 are characterized by that a magnetic ferrite antenna has been connected with a multicore cable whose output is connected in series with a set of adjustable attenuators, enabling determination of a distance in units of length, a selective amplifier, a mixer, an intermediate frequency filter, a low frequency amplifier which is directly connected with an acoustic indicator of the amplitude of a signal and a linear detector, and to it a meter of a signal amplitude is connected, whereas an oscillator is connected directly with the mixer, and the frequency tuning circuit is connected with the multicore cable, with the selective amplifier and the oscillator, besides, the frequency tuning circuit is connected directly with a constant-voltage regulator to which a direct-current source is connected.

The method or remote location according to the invention by determination or a distance or a source of an electromagnetic field in a form of a transmitter with a magnetic antenna of arbitrary and unknown orientation consists in that in the first stage approximate distances of the source of the field are determined from at least two measuring points and an approximate direction to the source of the field is determined, and in the second stage the biggest amplitude of the magnetic component of the field is measured again in one of those measuring points, and the distance of the source of the field is determined from the dependence of the mean value of the actual amplitude of the resultant vector of the magnetic component of a field induced by an elementary magnetic dipole of arbitrary spatial orientation on the distance of the measuring point from the said dipole, increased preferably by 2 dB, and in the case when the axis of the receiving magnetic antenna is approximately compatible with the determined direction of the position of the source of the field, and decreased, preferably by 2 dB, in the case when the axis of the receiving magnetic antenna is approximately perpendicular to the determined direction of the position of the source of the field.

On the other hand, the system of a location transmitter according to the invention is characterized by that it has a jack - switch whose supply contact is connected in series with a rectifying diode, a resistor limiting the charging current, a secondary battery, a resistor protecting against sparking and a stationary contact of the jack--switch. Parallel to the secondary battery and the resistor protecting against sparking an in--series circuit of a Zener diode and a light--emitting diode is connected. The moving contact of the jack-switch is connected with a generator through a supply-voltage regulator, whose earth is connected directly with the secondary battery, the Zener diode and the resistor limiting the charging current. The supply-and the stationary contacts of the jack-switch are connected to the mains through a supply charging pin.

The system of the location transmitter according to the invention is also characterized by that it has a housing in a form of, preferably a four--chamber, flat container made of insulating material. In one of the extreme cylindrical chambers a magnetic antenna with a ferrite core is situated, and in the second one - a secondary battery. The jack-switch and the light-emitting diode are mounted in walls closing one of the central chambers. In the second central chamber the other elements of the transmitter are situated. The space between extreme cylindrical chambers is bigger from 1/4 of the length of the said chambers.

The location receiving device according to the invention, especially comprising beside the antenna a set of adjustable attenuators, a selective amplifier, a mixer with an oscillator, an intermediate frequency filter and a low frequency amplifier provided with output signalling--indicating circuits is characterized by that in the signal channel it has the following connected in series: a periodic magnetic antenna distance--connected by a multicore cable through an induction coil with an input resonant circuit situated at an input of the mixer which is connected with output signalling-indicating circuits, through two low frequency amplifiers provided at inputs with band filters, whereby the first amplifier and the mixer are provided with circuits of voltage adjustment of the gain, which are parallely connected with the supply-voltage regulator through a precision potentiometer coupled with a scale and a scaling voltage regulator, whereas the second amplifier is provided with a distance-scale adjustment potentiometer.

The method of location according to the invention, at maintenance of a definite power of the location transmitter, ensures the accuracy of remote location of the source of the field better than $\pm$ 1/3 dB, also in difficult conditions of a coal-mine. By further repetition of measurements with this method the accuracy of location can still be increased.

A transmitter in the embodiment according to the invention can be applied as a standard transmitter which enables checking distance scaling in location receiving devices, especially in mining rescue. Besides, it can be used in the presence of explosive gases.

The designed system ensures constant output power of a generated signal till the moment of an almost complete run-down of a storage battery, due

0087168

0

to which a big accuracy of location of buried persons attained for at least two or three twenty-four hours' periods, at relatively small dimensions of the transmitter together with the secondary battery.

The design of the transmitter ensures big crushing strength.

The system of the transmitter ensures signalling the run-down state and limitation of the charging voltage of the secondary battery, which considerably facilitates the correct use.

The location receiving device according to the invention is characterized by a big accuracy of remote location of buried persons in difficult climatic conditions, is distinguished by easier service in relation to the hitherto applied devices. It can be applied not only in extra-breaking-down areas but also in mountain avalanche rescue etc.

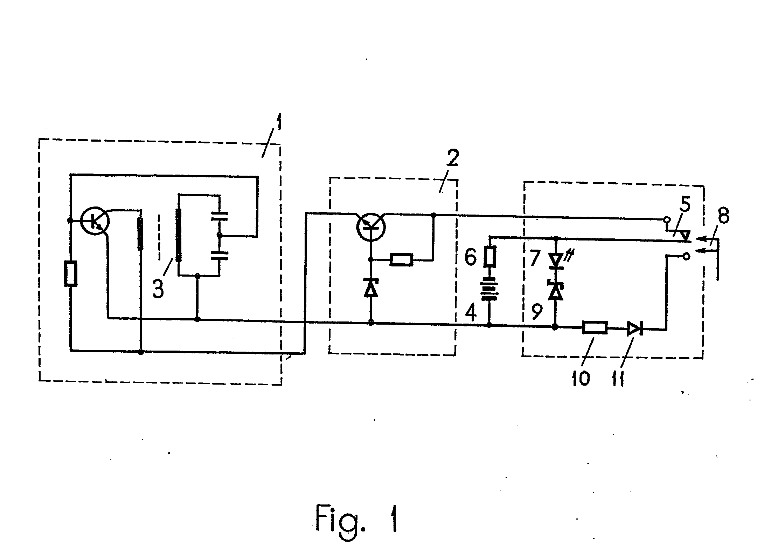

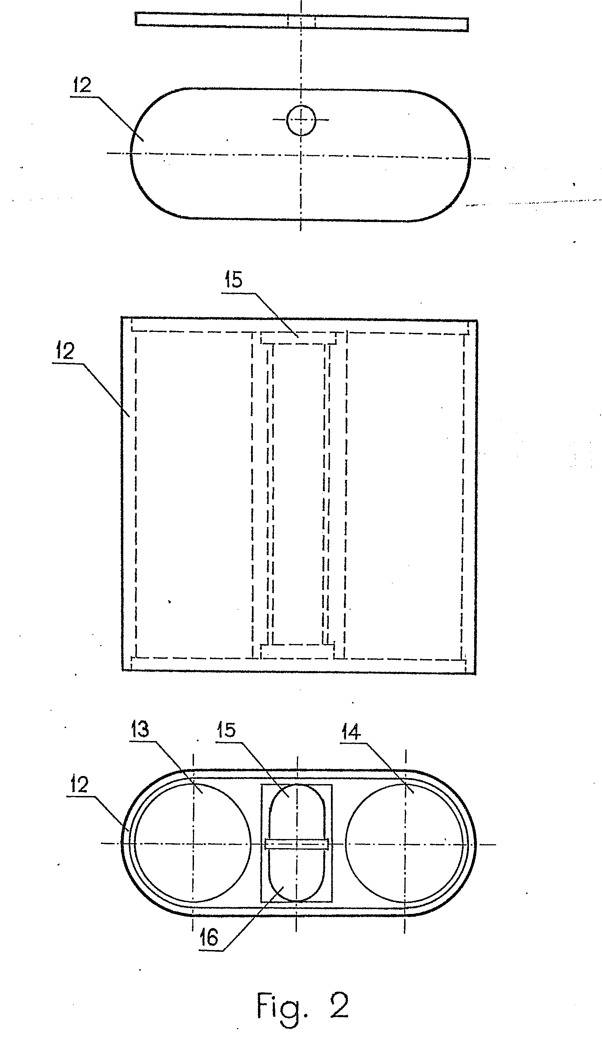

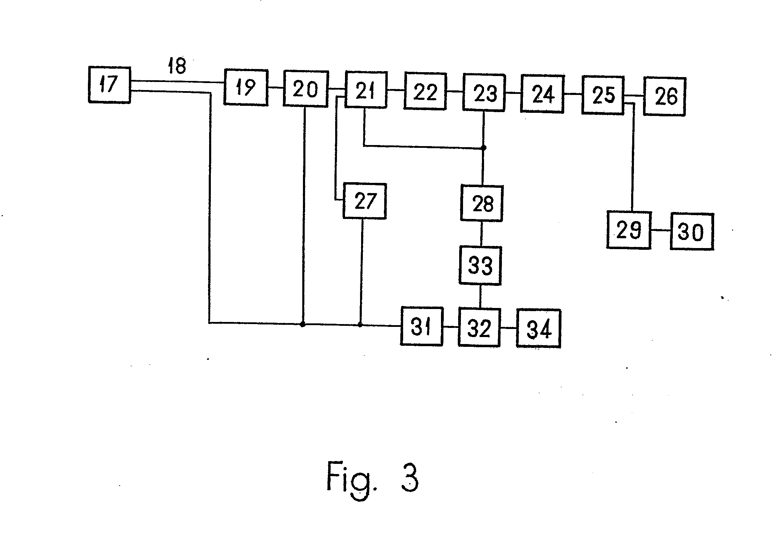

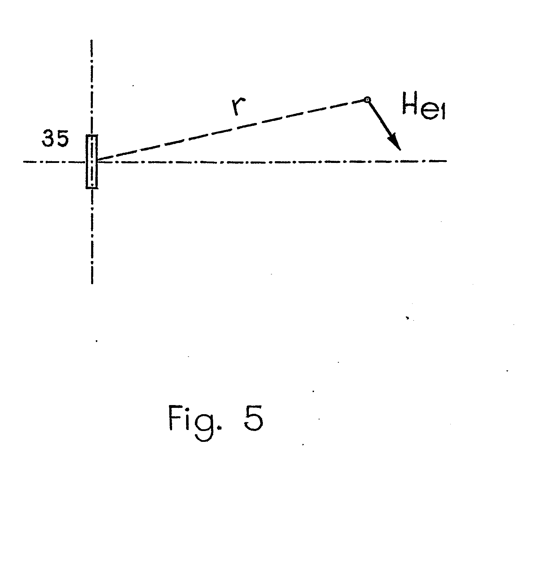

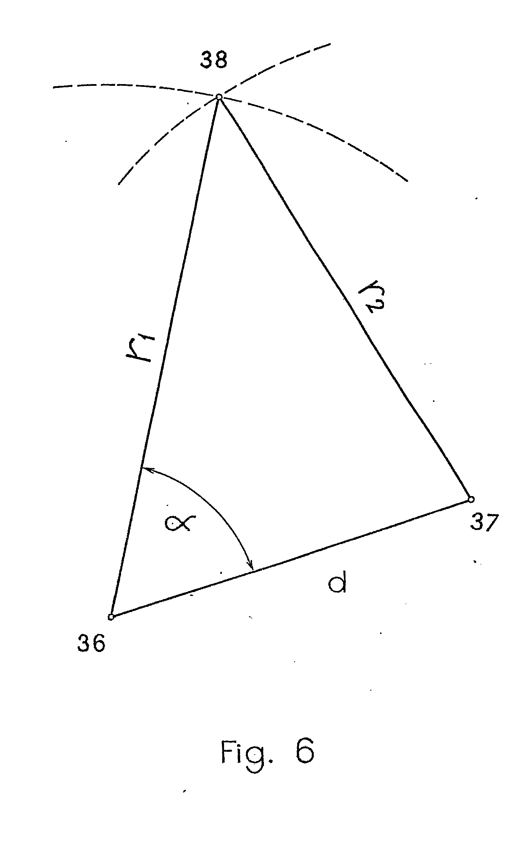

The subject of the invention is explained in more detail in exemplary embodiments in a drawing figs 1 to 6, where fig. 1 presents the circuit diagram of the system of a location transmitter, fig. 2 - the main elements of the design of the transmitter housing, fig.3 - the functional diagram of a location receiving device, fig.4 - curves of the dependence of an actual amplitude of a resultant vector of a magnetic component of a field - $He_1$ - on the distance of a source of this field in a form of an elementary magnetic dipole in a near-by zone, fig.5 - one of variants of situating a magnetic transmitting antenna and a vector $Hc_1$ of the magnetic component of the field in relation to each other, and fig.6 - the method of direction-finding a source of an electromagnetic field from two measuring points.

The method of location of buried persons according to the invention is realized by means of a set of devices comprising location transmitters with which these persons are equipped and location receiving devices which are used by a rescue party.

A location transmitter according to the invention has a generator 1 with a resonant circuit formed with an induction coil as a magnetic antenna 3, wchich is connected with a supply-voltage regulator circuit 2. The said circuit is connected with a secondary battery 4 through a sparking-protection resistor 6 and contacts of a jack - switch 5. Parallely to the in-series connected secondary battery 4 and the sparking-protection resistor 6 an in-series signalling circuit of a Zener diode 9 and a light-emitting diode 7 is connected. The said circuit is connected parallely to supply contacts in the jack - switch 5 through a charging-current limiting resistor 10 and a rectifying diode 11 connected in series therewith. Supply contacts of the jack - switch 5 are connected periodically with a supply charging pin 8.

A housing 12 of the location transmitter is a four-chamber container made of insulating material. In one of the extreme cylindrical chambers 13 and 14 the magnetic antenna 3 with a ferrite core is situated, and in the second - the secondary battery 4. The jack - switch 5 and the light-emitting diode 7 are mounted in walls closing one of the central chambers 15, whereas in the second central chamber 16 the other electornic components of the transmitter are situated. The said transmitter is carried in a pocket or suspended on the miner's belt.

The secondary battery 4 is charged by means of connecting to the jack - switch 5 the supply charging pin disconnecting the regulator circuit 2.

At a run-down secondary battery 4 charging current flows through a rectifying diode 11, a charging-current limiting resistor 10, a secondary battery 4 and a sparking-protection resistor 6.

On the other hand, after charging the secondary battery 4 the current circuit is closed only by the Zener diode 9 and the light-emitting diode 7. An in-series circuit of the said diodes limits charging voltage and signals by lighting the diode 7 the state of charging the secondary battery 4.

The transmitter is a source of an electromagnetic field of induction. This field has a structure of a field induced by an elementary dipole, due to small dimensions of the antenna of the transmitter.

A location receiving device according to the invention consists of a periodic magnetic antenna 17 with a diode tuning circuit, connected in series through a multicore cable 18 and an induction coil 19 with an input resonant circuit 20 provided with a second diode tuning circuit, and with a mixer having a voltage regulated gain 21, to which an oscillator with a third tuning circuit 27 is connected. An output of the mixer 21 is connected in series with a first narrow-band low-frequency filter 22, a first amplifier with a voltage regulated gain 23, a second narrow-band low-frequency filter 24, a second amplifier with a voltage regulated gain 25, whereas an output of the second amplifier 25 is connected directly with an amplitude acoustic and light indicator 26 and indirectly with a signal amplitude meter 30 through a linear detector 29. A frequency tuning potentiometer 31 coupled mechanically with a frequency scale is connected indirectly with a supply source 34 through a supply voltage regulator 32 and is connected at the same time directly with the multicore cable 18, the input resonant circuit 20 and the oscillator 27 with a diode tuning circuit, whereas a precision linear potentiometer 28 coupled mechanically with a distance scale is connected indirectly with the supply voltage regulator 32 through a scaling voltage regulator 33 and is at the same time connected directly with voltage regulation circuits of the gain of the mixer 21 and the first amplifier 23.

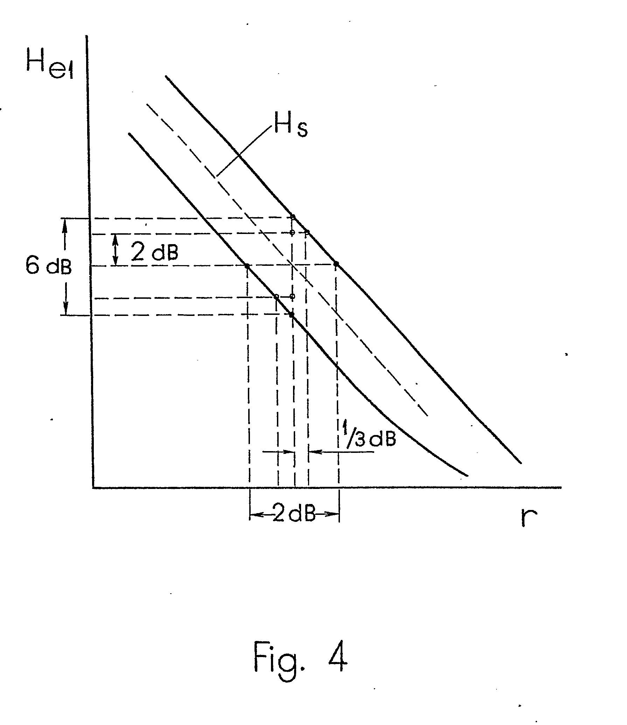

On the meter 30, which in the exemplary ambodiment is a linear analogue meter, the level of the nominal deflection of the pointer of the meter is marked, corresponding to the scaling curve $II_S$ in fig.4, as well as the level of the deflection of the meter pointer bigger by 2 dB from the nominal level, and the level of the deflection of the pointer smaller by 2 dB from the nominal level.

In the winding of the periodic magnetic antenna 1 an electromotive force is induced, proportional to the measured magnetic field induced by the searched-for location transmitter with a magnetic antenna.
The signal received from the antenna 17 through the multicore cable 18, a coupling element 19 and the input resonant circuit 20, after preliminary filtering off, is fed to an input of the mixer with voltage regulated gain 21, to which a signal from the oscillator 27 with a diode tuning circuit is fed. The signal of audio frequency thus obtained passes through the first narrow-band frequency filter 22, and then is amplified by the audio frequency amplifier with a voltage regulated gain 23. The said signal after passing through the second audio frequency filter 24 is additionally amplified by the final amplifier with regulated gain 25, enabling shifting the range of

0087168

- 15 -

the distance scale, and is further rectified in the linear detector 29. The level of this signal is measured by means of the meter 30. An audio indicator in a form of an earphone 26 serves for an audio control of received signals, especially weak signals.

The frequency tuning potentiometer 31, coupled with the frequency scale on which several dozens of numbered distinguishable frequency channels are marked, ensures tuning the receiving circuit by means of diode tuning circuits and enables selective choice of signals emitted by location transmitters operating at different frequencies.

The precision linear potentiometer 28 divides correspondingly constant voltage obtained from the scaling voltage regulator 33 and feeds it to the gain regulation circuits of the mixer 21 and the amplifier 23 so that within the required range of changes of the level of received signals it is possible to obtain a definite level of the output signal on the meter 30.

The device according to the invention enables realization of the method of determining the distance of a location transmitter with a magnetic antenna by a measurement of an amplitude of a magnetic component of the induced electromagnetic field. The measurement is effected by directing the magnetic antenna 17 on the maximum of the received signal and by setting the precision linear potentiometer 28 coupled with the distance scale in such a position at which the meter $30$ indicates a definite level, and on the scale of distance the distance $r$ is read in metres, of the selected measuring point $36$ from the source of the field, which is the location transmitter $35$.

The accuracy of scaling the location receiving device is chacked by means of a scaling transmitter, that is a location transmitter according to the invention of a definite frequency and a definite magnetic moment.

In the method of location according to the invention in the first stage two measuring points $36$ and $37$ are chosen in a near-by zone, distant from each other by a known distance $d$. In these points such a directioning of the receiving magnetic antenna of the location device is looked for at which the maximum of a signal is obtained and distances $r_1$ and $r_2$ are determined, based on the scaling curve $II_s$ to which the dependence $r = 0.486 \sqrt[3]{JS/He_1}$ corresponds, where J denotes the intensity of current flowing in the winding of the magnetic transmitting antenna, and S - - the total area of turns of the magnetic transmitting antenna with regard to the influence of the magnetic inductive capacity of the core of the antenna, the product JS being a known value resulting from technical parameters of an individual location transmitter.

The obtained triangle of known sides can be plotted on a plan and the value can be read of the the angle determining an approximate direction from point $\underline{38}$ in which the source of the field is situated in a form of a transmitter with an antenna of accidental and unknown orientation. The said direction can be also determined from the formula $\cos \alpha = /r_1^2 + d^2 - r_2^2/ \, 2 \, r_1 \, d.$

In the second stage, in measuring points $\underline{36}$ and $\underline{37}$ once more such a directioning of the receiving magnetic antenna is looked for, at which the maximum of a signal is obtained. If the axis of the antenna is approximately compatible with an approximate direction to point $\underline{38}$ in which the source of the field is situated, the distance of this source is determined from the dependence $\underline{r} = 0.612 \sqrt[3]{JS/He_1}$, whereas in the case when the axis of the antenna is approximately perpendicular to the said point $\underline{38}$, the distance of the source of the field is determined from the dependence $\underline{r} = 0.386 \sqrt[3]{JS/He_1}.$

In the case when the axis of the receiving magnetic antenna set at the reception of the biggest signal takes any skew position in relation to the approximate source of the field, it is not necessary to correct the distance determined in the first stage.

- 18 -                                          **0087168**

What is claimed is:

1. A method of remote location of buried persons
equipped with a source of an electromagnetic field
in a form of a transmitter with a magnetic antenna being a magnetic dipole of arbitrary and unknown orientation in a medium of an electric loss,
heterogenous and anisotropic, by measuring in the
reception point by means of a location device,
situated in a near-by zone, the biggest amplitude of a magnetic component of a field and determining the distance of the source of this field
from the dependence of the mean value of an actual amplitude of a resultant vector of a magnetic component of the field induced by such an
elementary dipole, on the distance of the said
dipole from the reception point, characterized
in that in the first stage approximate distances
of the source of the field are determined from
at least two measuring points and an approximate direction to the source of the field is defined, and in the second stage in one of the said
measuring points the biggest amplitude of the magnetic component of the field is measured again,
and the distance of the source of the field is
determined from the dependence of the mean value of an actual amplitude of a resultant vector of a magnetic component of the field induced
by an elementary magnetic dipole of arbitrary
spatial orientation, on the distance of the measuring point of the said field, increased preferably by 2 dB, in the case when the axis of the receiving magnetic antenna is approximately compatible with the determined direction of the position of the source of the field and decreased, preferably by 2 dB, in the case when the axis of the receiving magnetic antenna is approximately perpendicular to the determined direction of the position of the source of the field.

2. A system of a location transmitter for remote location of buried persons by a measurement of an amplitude or changes of an amplitude of a magnetic component of the field in a near-by zone, comprising a transistor generator connected with a magnetic antenna and a storage battery, characterized in that it has a jack - switch (5) whose supply contact is connected in series with a rectifying diode (11), a charging-current limiting resistor (10), a secondary battery (4), a sparking-protection resistor (6) and a stationary contact of the jack - switch (15), whereby parallel to a secondary battery (9) and the sparking-protection resistor (6) an in-series circuit of a Zener diode (9) and a light-emitting diode (7) is connected, and a moving contact of the jack-switch (5) is connected with a generator (1) through a supply-voltage regulator (2), whose neutral point is connected directly with the secondary battery (4), the Zener diode (9) and the charging-current limiting resistor (10), besides, the supply- and the stationary contacts of the jack-

switch (5) are connected to the mains through a supply charging pin (8).

3. A system according to claim 2, characterized in that it has a housing (12) in a form of, preferably a four-chamber, flat container made of insulating material, whereby in one of the extreme cylindrical chambers (13) and (14) a magnetic antenna with a ferrite core (3) is situated, and in the second one a secondary battery (4), whereas a jack-switch (5) and a light-emitting diode (7) are mounted in walls closing one of the two central chambers (15), and in the second central chamber (16) the other elements of the transmitter are situated, whereby the space between the extreme cylindrical chambers (13) and (14) is bigger from 1/4 of the length of the said chambers.

4. A location receiving device for determination of the distance of buried persons by a measurement of an amplitude or changes of an amplitude of a magnetic component of a field in a near-by zone, comprising beside the antenna a set of adjustable attenuators, a selective amplifier, a mixer with an oscillator, an intermediate frequency filter and a low frequency filter provided with output signalling-indicating circuits, characterized in that in the signal channel it has the following connected in series: a periodic magnetic antenna (17) distance-connected by a multicore cable (18) through an induction coil (19) with a resonant input circuit (20) situated at an input of a mixer (21), which is connected with output signalling-indicating circuits (26, 29, 30) through two low frequency amplifiers (23, 25) provided at inputs with band filters correspondingly (22, 24), whereby the first amplifier (23) and the mixer (21) are provided with circuits of voltage regulation of the gain, which are further connected in parallel with a supply-voltage regulator (32) through a precision potentiometer (28) coupled with the distance scale and a scaling voltage regulator (33), whereas the second amplifier (25) is provided with a distance scale adjustment potentiometer.

1/6

Fig. 1

EPAB-30754
0087168

12

15

12

13    15    14

12

16

Fig. 2

3/6

EPAB-30754
**0087168**

Fig. 3

EPAB-30754
0087168

Fig. 4

EPAB 30754
0087168

Fig. 5

EPAB-30754
**0087168**

Fig. 6